# FASCICULE DE BREVET EUROPEEN

(11) **EP 2 231 363 B1**
(45) Date de publication et mention de la délivrance du brevet: **20.07.2011**
(21) Numéro de dépôt: 08864187.3
(22) Date de dépôt: 16.12.2008
(51) Int. Cl.: B24C 1/10, B24C 11/00

(54) **PARTICULES DE GRENAILLAGE**
SANDSTRAHLPARTIKEL
SHOT BLASTING PARTICLES

(30) Priorité: 20.12.2007 FR 0760149
(43) Date de publication de la demande: 29.09.2010
(73) Titulaire: Saint-Gobain Centre de Recherches et d'Etudes Européen, 92400 Courbevoie (FR)
(72) Inventeur: BEAUDONNET, Anne-Laure, F - 84440 ROBION (FR)
(74) Mandataire: Sartorius, Jérome
(86) Numéro de dépôt international: PCT/FR2008/052321
(87) Numéro de publication internationale: WO 2009/081026

(56) Documents cités:
- EP-A- 0 662 461
- JP-A- 2007 245 248

## Description

L'invention concerne un procédé de grenaillage, notamment pour le traitement de surfaces métalliques, par exemple en acier, et des particules pouvant être utilisées dans un tel procédé.

Le grenaillage consiste à projeter à grande vitesse des particules, généralement des billes, sur la pièce à traiter. Les particules sont réalisées dans des matériaux de dureté adaptée à l'objectif à atteindre. On utilise couramment des billes en acier ou des billes céramiques.

Le grenaillage peut être mis en oeuvre dans un but de nettoyage, par exemple pour l'enlèvement de la rouille (décalaminage), ou pour des précontraintes de compression à la surface d'une pièce (« grenaillage de précontrainte », en anglais « shot-peening »). De telles précontraintes permettent d'améliorer les propriétés de la pièce traitée par durcissement superficiel (écrouissage). Par exemple elles peuvent permettre d'augmenter la résistance à la fatigue ou la résistance à la corrosion. Le grenaillage de précontrainte est ainsi classiquement mis en oeuvre, par exemple, pour améliorer la tenue en service de pièces fortement sollicitées comme par exemple des pièces d'automobiles, en particulier des pignons ou des arbres de transmission, des ressorts, des barres de torsion, des bielles, des vilebrequins, etc.

### ETAT DE LA TECHNIQUE

Les billes ZIRSHOT® commercialisées par Saint-Gobain ZirPro sont des billes de zircone-silice de densité 3,76 qui sont largement utilisées pour le grenaillage de précontrainte.

EP 578 453 décrit également des billes de zircone frittées destinées au grenaillage de précontrainte.

Le document EP 0 662 461 décrit des particules de grenaillage selon le préambule de la revendication 1.

### OBJET ET RESUME DE L'INVENTION

La projection de billes céramiques ne permet pas toujours de créer des précontraintes sur une épaisseur suffisante. C'est pourquoi le procédé de grenaillage peut comporter une première étape de projection de billes métalliques suivie d'une deuxième étape de projection de billes céramiques. L'épaisseur de la couche superficielle de la pièce affectée par le grenaillage est alors augmentée.

Un but de l'invention est de proposer un procédé de grenaillage permettant de créer efficacement des contraintes résiduelles élevées en surface et dans une couche superficielle de la pièce traitée.

L'invention propose des particules selon la revendication 1.

Comme cela apparaîtra plus en détail dans la suite de la description, de manière surprenante, cette plage de parametres permet d'obtenir des performances remarquables.

Le procédé peut encore comporter une ou plusieurs des caractéristiques optionnelles suivantes :
- Les particules sont des billes ;
- Les particules sont des particules obtenues par fusion;
- Les particules ont une dureté supérieure à 700 HV_{0,5}, de préférence supérieure à 800 HV_{0,5}, voire supérieure à 900 HV_{0,5}, et/ou inférieure à 1100 HV_{0,5}, voire inférieure à 975 HV_{0,5}, la dureté étant de préférence comprise entre 900 et 1100 HV_{0,5};
- Les particules comportent plus de 30 % de zircone (ZrO₂), voire plus de 40 %, 50%, 60 % ou 70 % de zircone, et/ou moins de 90 %, voire moins de 80 % de zircone (ZrO₂), en pourcentages massiques sur la base des oxydes ;
- Les particules comportent plus de 10 % de silice (SiO₂), ou plus 13 % de silice, et/ou moins de 50 %, 30 %, ou 20 % de silice, en pourcentages massiques sur la base des oxydes ;
- Les particules comportent plus de 1,5 %, 2,0%, 4 % ou 4,5 % d'alumine (Al₂O₃), et/ou moins de 7 % ou de 5 %, d'alumine, en pourcentages massiques sur la base des oxydes ;
- La zircone, la silice et l'alumine représentent ensemble de préférence plus de 80 %, voire plus de 90 % ou même plus de 95 %, ou sensiblement 100 % de la composition des particules ;
- La teneur maximale en Fe₂O₃ est de 0,5 %, en pourcentage massique sur la base des oxydes ; Les autres oxydes possibles sont par exemple MgO, CaO et Na₂O; De préférence, les particules ne comportent pas de fer, en particulier, ni sous forme d'oxyde, ni sous forme métallique.
- Les particules présentent une taille inférieure à 2 mm, de préférence inférieure à 1 mm.
- La surface traitée est une surface métallique, par exemple en acier ;
- La surface traitée est une surface d'une pièce automobile. La pièce traitée peut être choisie parmi un pignon, un arbre de transmission, un ressort, une barre de torsion, une bielle, et un vilebrequin ;
- Les particules sont projetées à une vitesse supérieure à 40 m/s, de préférence supérieure à 48 m/s, voire supérieure à 50 m/s, voire supérieure à 55 m/s ;
- Dans un mode de réalisation, seules des particules telles que définies ci-dessus, et présentant éventuellement une ou plusieurs des caractéristiques optionnelles susmentionnées, sont projetées ;
- Dans un mode de réalisation, le procédé ne comporte qu'une unique opération de projection, c'est-à-dire qu'après projection desdites particules, aucune opération ultérieure de projection n'est effectuée. Autrement dit, le procédé ne comporte pas d'étape de projection d'un autre média que les particules susmentionnées;
- Dans un autre mode de réalisation, le procédé comporte une étape de projection d'un autre média que les particules susmentionnées. En particulier, le procédé peut comporter au moins deux opérations de projection, une première de ces opérations constituant un procédé de grenaillage selon l'invention, la deuxième de ces opérations, antérieure ou postérieure à la première opération, ne constituant pas un procédé de grenaillage selon l'invention ;
- Le procédé ne comporte pas d'étape de projection de billes métalliques.

### BREVE DESCRIPTION DES FIGURES

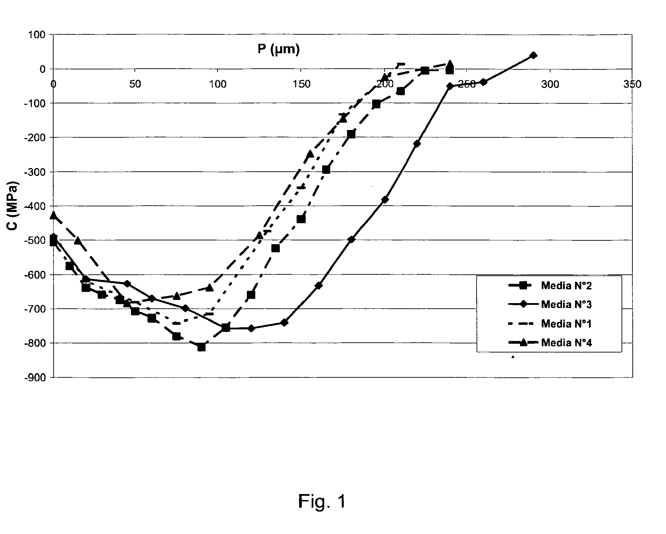

D'autres caractéristiques et avantages de l'invention apparaîtront encore à la lecture de la description détaillée qui va suivre et à l'examen du dessin annexé dans lequel la figure 1 représente un graphique fournissant, pour différents médias, l'évolution des contraintes résiduelles (« C ») en fonction de la profondeur (« P ») à partir de la surface d'une pièce ayant été grenaillée avec lesdits médias.

### DEFINITIONS

Par « billes », on entend une particule présentant une sphéricité, c'est-à-dire un rapport entre son plus petit diamètre et son plus grand diamètre, supérieur ou égal à 0,75, quelle que soit la façon par laquelle cette sphéricité a été obtenue. Dans un mode de réalisation de l'invention, les billes présentent une sphéricité supérieure ou égale à 0,8, de préférence supérieure ou égale à 0,9.

Par « produit fondu » ou « produit obtenu par fusion », on entend un produit obtenu par solidification, par refroidissement, d'un bain de liquide en fusion. « Un bain de liquide en fusion » est une masse qui, pour conserver sa forme, doit être contenue dans un récipient. Un bain de liquide en fusion peut contenir des parties solides, mais en quantité insuffisante pour qu'elles puissent structurer ladite masse.

On appelle « taille médiane » d'un ensemble de grains, généralement notée D50, la taille divisant les grains de cet ensemble en première et deuxième populations égales en masse, ces première et deuxième populations ne comportant que des grains présentant une taille supérieure, ou inférieure respectivement, à la taille médiane.

On appelle « taille » d'une particule la moyenne de sa plus grande dimension dM et de sa plus petite dimension dm : (dM+dm)/2.

On appelle « « zircone » l'oxyde de zirconium ZrO₂. Un peu de HfO₂, chimiquement indissociable de ZrO₂ et présentant des propriétés semblables, est toujours naturellement présent dans les sources de zircone à des teneurs inférieures à 2 %.

On appelle « silice » l'oxyde de silicium SiO₂.

On appelle « alumine » l'oxyde d'aluminium Al₂O₃.

Sauf mention contraire, les pourcentages utilisés pour caractériser une composition se réfèrent toujours à des pourcentages massiques sur la base des oxydes.

### DESCRIPTION DETAILLEE

Pour fabriquer de telles billes, on peut procéder suivant un procédé comportant les étapes suivantes :
a) préparation d'une charge de départ comportant des constituants des billes à fabriquer et/ou des précurseurs de ces constituants ;
b) fusion de la charge de départ de manière à former un bain de liquide en fusion ;
c) coulage du bain de manière à former un filet de liquide en fusion et dispersion de ce filet en gouttelettes ;
d) refroidissement des gouttelettes de manière à former des billes;
e) optionnellement, réduction granulométrique, en particulier par broyage, et/ou sélection granulométrique.

A l'étape a), des poudres de constituants et/ou de précurseurs sont mélangées de manière à constituer un mélange sensiblement homogène.

Selon l'invention, l'homme du métier ajuste la composition de la charge de départ de manière à obtenir, à l'issue de l'étape d), des billes présentant la composition souhaitée. Dans le cadre de la fabrication de billes céramiques, l'analyse chimique des billes est généralement sensiblement identique à celle de la charge de départ. En outre, le cas échéant, par exemple pour tenir compte de la présence d'oxydes volatils, ou pour tenir compte de la perte en SiO₂ lorsque la fusion est opérée dans des conditions réductrices, l'homme du métier sait comment adapter la composition de la charge de départ en conséquence.

A l'étape b), la charge de départ est fondue, de préférence dans un four à arc électrique. L'électrofusion permet en effet la fabrication de grandes quantités de produit avec des rendements intéressants. Mais tous les fours connus sont envisageables, comme un four à induction, un four solaire ou un four à plasma par exemple, pourvu qu'ils permettent de faire fondre, de préférence complètement, la charge de départ. Les conditions peuvent être oxydantes ou réductrices.

A l'étape b), on peut par exemple utiliser le procédé de fusion à l'arc décrit dans le brevet français n° 1 208 577 et ses additions n° 75893 et 82310.

A l'étape c), le bain de liquide en fusion est coulé de manière à former un filet.

A l'étape d), ce filet est dispersé en petites gouttelettes liquides qui, par suite de la tension superficielle, prennent, pour la majorité d'entre elles, une forme sensiblement sphérique. Cette dispersion peut être opérée par soufflage, notamment avec de l'air et/ou de la vapeur d'eau, ou par tout autre procédé d'atomisation d'une matière fondue connu de l'homme de l'art.

A l'étape e), les gouttelettes sont refroidies pour se solidifier sous la forme de billes solides. Le refroidissement peut résulter de la dispersion. La vitesse de refroidissement peut être adaptée en fonction du degré de cristallisation souhaité.

Dans une étape optionnelle f), la taille des billes est ajustée pour obtenir une poudre particulière. A cet effet, les particules obtenues par fusion peuvent être broyées, puis subir un tri granulométrique, par tamisage ou par séparation à air.

### EXEMPLES

Les exemples non limitatifs suivants sont fournis dans le but d'illustrer l'invention ainsi que des exemples de comparaison.

Dans ces exemples, différents médias de grenaillage ont été testés. Les caractéristiques de ces différents médias sont données dans le tableau 1. Le média 2 correspond au produit ZIRSHOT^{®} Z425, produit de référence.

La densité apparente a été mesurée à l'aide d'un pycnomètre à hélium automatique Accupyc 1330.

La microdureté a été mesurée à l'aide d'un micro-duromètre Vickers Zwick 3212. Les valeurs obtenues correspondent à des duretés Vickers HV_{0,5}.

L'analyse chimique a été déterminée par fluorescence aux rayons X.

L'analyse granulométrique a été réalisée par tamisage manuel avec des tamis conformes à la norme ISO 3310 à maille carrée.

Toutes les particules des médias testés étaient des billes céramiques obtenues par fusion et présentaient une taille comprise entre 425 et 600 µm.

Pour effectuer les tests, chaque média a été projeté sur une cible en acier XC65 au moyen d'un pistolet à effet Venturi muni d'une buse de projection de diamètre 80 mm, disposée à 150 mm de la cible, avec un angle de projection de 85° et à la vitesse la plus élevée possible (colonne « vitesse maximale » du tableau 1). La projection a été poursuivie jusqu'à obtention d'un taux de recouvrement (pourcentage de surface impactée par les médias projetés) de 125%.

Les contraintes résiduelles ont ensuite été mesurées par diffraction des rayons X avec un appareil Siemens D500 à partir de l'analyse de la déformation moyenne des plans cristallographiques en fonction de l'orientation de ceux-ci. Les résultats sont représentés sur la figure 1.

**Tableau 1**

| Média N° | 1 | 2 | 3 | 4 |
|---|---|---|---|---|
| Densité apparente | 3,17 | 3,83 | 4,66 | 5,33 |
| Microdureté HV_{0,5} (kg/mm2) | 785 | 803 | 945 | 984 |
| ZrO₂ | 41,5 | 67,5 | 73,4 | 63,0 |
| SiO₂ | 43,0 | 30,4 | 15,0 | 7,6 |
| Al₂O₃ | 8,1 | 1,3 | 4,7 | 5,0 |
| Y₂O₃ | | 0,1 | 6,2 | 3,8 |
| CeO₂ | | | | 19,7 |
| D50(µm) | 536 | 509 | 496 | 548 |
| Vitesse maximale (m/s) | 60 | 60 | 60 | 46 |

On observe que les contraintes résiduelles en surface, c'est-à-dire à une profondeur nulle, sont sensiblement équivalentes pour les médias 1 à 3 testés. Cependant, celles-ci sont moindres pour le média 4.

On observe également que lorsque la densité apparente augmente et jusqu'à une densité apparente de 4,66 (média 3), l'épaisseur de la couche superficielle affectée par le grenaillage, c'est-à-dire la profondeur jusqu'à laquelle elle s'étend, augmente. De manière surprenante, une augmentation de la densité apparente au-delà de 5, (5,33 avec le média 4) conduit cependant à une diminution de cette épaisseur.

Ces essais montrent également qu'un média de forte dureté (média 4) ne conduit pas systématiquement à de bons résultats.

La profondeur du point où les contraintes résiduelles sont maximales évolue de la même façon, la profondeur maximale étant atteinte avec une densité apparente comprise entre 4 et 5.

On observe également que la vitesse maximale pouvant être atteinte est moindre avec les billes céramiques de densité apparente supérieure à 5. De manière surprenante, cette baisse de vitesse ne se traduit cependant pas par une augmentation des contraintes résiduelles en surface. Au contraire, celles-ci sont plus faibles qu'avec des billes présentant une densité apparente plus faible, et notamment comprise entre 4 et 5.

Outre la génération de contraintes résiduelles en surface et à proximité de la surface, un des effets important du grenaillage est la modification de l'état de surface, et notamment la modification de la rugosité. Une rugosité trop élevée peut conduire à une rupture prématurée de la pièce grenaillée ; il est donc important de la maitriser.

Dans le cas suivant, des éprouvettes en acier 92V45 ont été grenaillées en deux passes : une première passe avec des billes d'acier ou avec des billes céramiques de densité 4,6 selon l'invention (média N°5) suivie d'une seconde passe avec des billes céramiques conventionnelles Z210, avec des périmètres de grenaillage permettant d'obtenir des niveaux de contraintes résiduelles sensiblement identiques.

Caractéristiques des billes d'acier :
- densité : 7,7
- microdureté : 470HV0,5
- analyse chimique :
   - Fe : complément à 100 %
   - C : 0,85-1,2 %
   - Mn : 0,6-1,2 %
   - Si : 0,4-1,5
   - Ph ≤ 5 0,05 %
   - S ≤ 0,05%
- d50 = 1000 µm
- vitesse estimée à 45 m/s.

Caractéristiques des billes céramiques média N°5 :
- identiques à celles du média N°3 à l'exception de :
- d50 : 900 µm
- vitesse estimée à 48 m/s.

Caractéristiques des billes Z210 (Zirshot Z210): identiques à celles du média N°2 à l'exception de d50 = 255 µm.

**Tableau 2**

| | Contraintes résiduelles en surface (Mpa) | Epaisseur affectée (µm) | Ra µm) |
|---|---|---|---|
| 1^{ere} passe acier | -414 | 275 | 5,6 |
| 1^{ere} passe média N°5 | -552 | 300 | 4,0 |
| 2^{eme} passe acier + Z210 | -707 | 220 | 5,2 |
| 2^{eme} passe média N°5 + Z210 | -700 | 280 | 3,6 |

Le tableau 2 montre que l'utilisation de billes selon l'invention améliore significativement l'état de surface, et en particulier diminue la rugosité moyenne Ra.

Ce tableau démontre également l'intérêt à ce qu'un procédé de grenaillage selon l'invention comporte une étape de projection d'un autre média que des particules selon l'invention.

Comme cela apparaît clairement à présent, l'invention fournit donc un procédé de grenaillage permettant de créer efficacement des contraintes résiduelles élevées en surface et dans une couche superficielle de la pièce traitée.

Bien entendu, la présente invention n'est pas limitée aux modes de réalisation décrits et représentés fournis à titre d'exemples illustratifs et non limitatifs.

En particulier, les billes pourraient être des billes frittées.

Le procédé de grenaillage peut également être mis en oeuvre dans une application de nettoyage.

L'objet de l'invention est défini dans les revendications ci-jointes.

## Revendications

1. Particules de grenaillage constituées en un matériau céramique, présentant une densité apparente supérieure à 4,0 et inférieure à 5,0, et comportant plus de 5 % et moins de 60% de silice **caractérisé par** plus de 1% et moins de 10% d'alumine, en pourcentage massique sur la base des oxydes.

2. Particules selon la revendication précédente, présentant une densité apparente supérieure à 4,3.

3. Particules selon la revendication précédente, présentant une densité apparente supérieure à 4,5.

4. Particules selon l'une quelconque des revendications précédentes, présentant une densité apparente inférieure à 4,9.

5. Particules selon l'une quelconque des revendications précédentes, se présentant sous la forme de billes.

6. Particules selon l'une quelconque des revendications précédentes, obtenues par fusion, ou par frittage.

7. Particules selon l'une quelconque des revendications précédentes, présentant une taille inférieure à 1 mm.

8. Particules selon l'une quelconque des revendications précédentes, comportant:
- plus de 30 % et moins de 90 % de zircone (ZrO₂), ;
- plus de 5 % et moins de 60 % de silice, et
- moins de 10 % d'alumine (Al₂O₃), en pourcentages massiques sur la base des oxydes,
- la zircone, la silice et l'alumine représentant ensemble plus de 90 % de la composition des particules.

9. Particules selon l'une quelconque des revendications précédentes, comportant plus de 60 % et moins de 80 % de zircone (ZrO₂), en pourcentages massiques sur la base des oxydes.

10. Particules selon l'une quelconque des revendications précédentes, comportant plus de 10 % et moins de 30 % de silice, en pourcentage massique sur la base des oxydes.

11. Particules selon l'une quelconque des revendications précédentes, comportant moins de 20 % de silice, en pourcentage massique sur la base des oxydes.

12. Particules selon l'une quelconque des revendications précédentes, comportant plus de 4 % et moins de 7 % d'alumine (Al₂O₃), en pourcentage massique sur la base des oxydes.

13. Procédé de grenaillage comportant une opération de projection de particules sur une surface d'une pièce, dans lequel lesdites particules sont conformes à l'une quelconque des revendications précédentes.

14. Procédé selon la revendication précédente, dans lequel les particules sont projetées à une vitesse supérieure à 55 m/s.

15. Procédé selon l'une quelconque des revendications 13 et 14, comportant une étape de projection d'un autre média que lesdites particules.

## Claims

1. Shot blasting particles constituted by a ceramic material, having an apparent relative density of more than 4.0 and less than 5.0, and comprising more than 5% and less than 60% of silica, **characterized by** more than 1% and less than 10% of alumina, as a percentage by weight based on the oxides.

2. Particles according to the preceding claim, having an apparent relative density of more than 4.3.

3. Particles according to the preceding claim, having an apparent relative density of more than 4.5.

4. Particles according to any preceding claim, having an apparent relative density of less than 4.9.

5. Particles according to any preceding claim, in the form of beads.

6. Particles according to any preceding claim, obtained by fusing, or by sintering.

7. Particles according to any preceding claim, having a size of less than 1 mm.

8. Particles according to any preceding claim, comprising
- more than 30% and less than 90% of zirconia (ZrO₂),
- more than 5% and less than 60% of silica and,
- less than 10% of alumina (Al₂O₃), as a percentage by weight based on the oxides,
zirconia, silica and alumina representing, together, more than 90% of the composition of the particles.

9. Particles according to any preceding claim, comprising more than 60% and less than 80% of zirconia (ZrO₂), as a percentage by weight based on the oxides.

10. Particles according to any preceding claim, comprising more than 10% and less than 30% of silica, as a percentage by weight based on the oxides,

11. Particles according to any preceding claim, comprising less than 20% of silica, as a percentage by weight based on the oxides.

12. Particles according to any preceding claim, comprising more than 4% and less than 7% alumina (Al₂O₃), as a percentage by weight based on the oxides.

13. A shot blasting method comprising an operation for projecting particles onto a surface of a part, wherein said particles are in accordance with any preceding claim.

14. A method according to the preceding claim, wherein the particles are projected at a velocity of more than 55 m/s.

15. A method according to any one of claims 13 and 14, comprising a step of projecting a medium other than said particles.

## Patentansprüche

1. Sandstrahlteilchen aus einem keramischen Material mit einer scheinbaren Dichte von mehr als 4,0 und weniger als 5,0, welche mehr als 5% und weniger als 60% Siliciumoxyd enthalten,
**gekennzeichnet durch** mehr als 1% und weniger als 10% Aluminiumoxyd in Massenprozenten auf der Basis der Oxyde.

2. Teilchen nach dem vorhergehenden Anspruch, welche eine scheinbare Dichte von mehr als 4,3 aufweisen.

3. Teilchen nach dem vorhergehenden Anspruch, welche eine scheinbare Dichte von mehr als 4,5 aufweisen.

4. Teilchen nach einem der vorhergehenden Ansprüche, welche eine scheinbare Dichte von weniger als 4,9 aufweisen.

5. Teilchen nach einem der vorhergehenden Ansprüche in Form von Kugeln.

6. Teilchen nach einem der vorhergehenden Ansprüche, welche durch Schmelzen oder Sintern erzeugt werden.

7. Teilchen nach einem der vorhergehenden Ansprüche, welche eine Größe von weniger als 1 mm aufweisen.

8. Teilchen nach einem der vorhergehenden Ansprüche, die enthalten:
- mehr als 30% und weniger als 90% Zirkon (zero,2);
- mehr als 5% und weniger als 60% Siliciumoxyd, und
- weniger als 10% Aluminiumoxyd (Al₂O₃), in Massenprozenten auf der Basis der Oxyde,
- wobei das Zirkon, das Siliciumoxyd und das Aluminiumoxyd zusammen mehr als 90% der Teilchenzusammensetzung bilden.

9. Teilchen nach einem der vorhergehenden Ansprüche, welche mehr als 60% und weniger als 80% Zirkon (ZrO₂) aufweisen, in Massenprozenten auf der Basis der Oxyde,

10. Teilchen nach einem der vorhergehenden Ansprüche, welche mehr als 10% und weniger als 30% Siliciumoxyd aufweisen, in Massenprozenten auf der Basis der Oxyde.

11. Teilchen nach einem der vorhergehenden Ansprüche, welche weniger als 20% Siliciumoxyd aufweisen, in Massenprozenten auf der Basis der Oxyde,

12. Teilchen nach einem der vorhergehenden Ansprüche, welche mehr als 4% und weniger als 7% Aluminiumoxyd (Al₂O₃) aufweisen, in Massenprozenten auf der Basis der Oxyde.

13. Sandstrahlverfahren, welches einen Schleudervorgang von Teilchen auf die Oberfläche eines Werkstücks aufweist, bei dem die Teilchen einem der vorhergehenden Ansprüche entsprechen.

14. Verfahren nach dem vorhergehenden Anspruch, in welchem die Teilchen mit einer Geschwindigkeit von mehr als 55 m/s geschleudert werden.

15. Verfahren nach einem der Ansprüche 13 und 14, bei dem in einem Schritt des Schleudervorgangs mit einem anderen Medium als den besagten Teilchen gearbeitet wird.
